# EUROPEAN PATENT SPECIFICATION

(11) **EP 0 717 926 B1**
(45) Date of publication and mention of the grant of the patent: **21.02.2001**
(21) Application number: 95203510.3
(22) Date of filing: 15.12.1995
(51) Int. Cl.: A01J 5/017, B25J 19/06, A01K 1/12

(54) **An implement for automatically milking animals, such as cows**
Vorrichtung zum automatischen Melken von Tieren, wie zum Beispiel Kühen
Dispositif de traire automatique d'animaux, par exemple des vaches

(30) Priority: 20.12.1994 NL 9402158
(43) Date of publication of application: 26.06.1996
(73) Proprietor: MAASLAND N.V., 3155 PD Maasland (NL)
(72) Inventor: van der Laan, Rudolf Edward, NL-3171 NA Poortugaal (NL)
(74) Representative: Corten, Maurice Jean F.M.

(56) References cited:
- EP-A- 0 091 892
- EP-A- 0 476 771
- EP-A- 0 592 043
- FR-A- 2 553 864
- FR-A- 2 643 987
- US-A- 4 839 749

## Description

The invention relates to an implement for automatically milking animals as described in the preamble of claim 1.

Such an implement is described in document EP-A-0 091 892.

In an implement of this kind, an operating person or supervisor might inspect the implement periodically. Upon inspecting the above-mentioned implement, the operating person has to be careful for moving parts of the implement, as the implement operates fully automatically and as the robot arm may be activated whenever an animal will enter the milk box in order to be milked. It will be obvious that, when the attention of the person approaching the milking robot is distracted or when this person forgets to put the implement out of operation, there may arise a dangerous situation.

The invention aims at obtaining an implement of the above-mentioned type, in which this drawback does not occur or is at least limited to a considerable extent.

According to the invention, this is achieved by the features defined in the characterizing part of claim 1. In this manner it is achieved that an operating person, or any other person, can safely approach the implement and carry out activities thereto, while it is minimized that the implement is being put out of operation repeatedly by false alarm, or from supplying an auditive or visual signal in the case that e.g. vermin, such as mice, and/or domestic animals, such as cats, approach the robot arm too closely.

It is noticed that protection means for industrial robots are well known, e.g. from document FR-A-2 553 864. However, these protection means do not have a computer with an adjustable threshold value as described in claim 1.

According to a preferred embodiment of the invention, the milking robot is put out of operation by the protection means when the person approaches the robot arm too closely and, consequently, might be in danger. In this manner, for example, the person can be prevented from getting jammed between e.g. pivotable arm parts of the robot arm. In particular when the robot arm is pivoted from the milking position to outside the milk box into the inoperative position, the person is prevented from coming into contact with the relatively heavy robot arm.

Furthermore, according to a preferred embodiment of the invention, it is possible that, by means of an auditive or visual signal, the protection means point out to the person that the robot arm is approached too closely. The auditive or visual signal may be applied in the implement separately or in combination with the aforementioned protection means. According to a preferred embodiment of the invention, the protection means are disposed on the fencing of the milk box. According to an other preferred embodiment of the invention, the protection means are disposed at a height of between 30 and 170 cm, preferably of 150 cm, from the floor. According to again an other preferred embodiment of the invention, the protection means are pivotable, the arrangement being such that, after and/or during pivoting of the protection means, the milking robot is put out of operation. After pivoting of the protection means, the person can carry out inspections and activities to the milking robot without running the risk that the same comes into operation.

According to a preferred embodiment of the invention, a simple way of putting the milking robot out of operation is obtained when the protection means comprise a break contact, such as a micro switch, which, during pivoting of the protection means, interrupts an electricity circuit or closes same, as a result of which the power supply and/or the pneumatic system of the milking robot are/is put out of operation. In a simple embodiment according to the invention, the protection means comprise a bow. According to a further preferred embodiment of the invention, at least part of the bow is covered with gauze or an other type of covering material, such as a net or chipboard. According to again a further preferred embodiment of the invention, the bow is upwardly pivotable from a position in a substantially horizontal plane through an angle of at least 90°, preferably 110°. By pivoting the bow through such an angle, due to a favourable position of its centre of gravity, it is possible, without further measures such as a locking being necessary, to maintain same in the upwardly pivoted position when the person inspects the robot arm or carries out maintenance work thereto.

In an other embodiment according to the invention, the protection means comprise a light-interrupting sensor transmitting a beam of light along the front of the robot arm and supplying a signal to a computer constituting part of the implement when the beam of light is interrupted by e.g. a person, with the aid of which signal the milking robot is put out of operation and/or it is pointed out to the person, by means of an auditive or visual signal, that the robot arm has been approached too closely.

In again an other embodiment according to the invention, the protection means comprise a contact strip disposed in or on the floor around the robot arm, which contact strip, when the person treads thereon, supplies a signal to a computer constituting part of the implement, by means of which signal the milking robot is put out of operation and/or it is pointed out to the person, by means of an auditive or visual signal, that the robot arm has been approached too closely.

In again a further embodiment according to the invention, the protection means comprise an infrared sensor covering at least the area where the robot arm is arranged in its inoperative position, and supplying a signal when the person enters there, by means of which signal the milking robot is put out of operation and/or it is pointed out to the person, by means of an auditive or visual signal, that the robot arm has been approached too closely.

According to a further inventive feature, the contact strip has a width of approximately 40 cm, and includes piezo elements.

For a better understanding of the invention and to show how the same may be carried into effect, reference will now be made, by way of example, to the accompanying drawings, in which:
Figure 1 shows a side view of an implement for automatically milking animals, in which the protection means are provided according to a first embodiment of the invention;
Figure 2 shows, in plan view, the implement shown in Figure 1;
Figure 3 shows, in plan view, part of the implement shown in Figure 1, in which implement the protection means are provided according to a second embodiment of the invention, and
Figure 4 shows, in plan view, part of the implement shown in Figure 1, in which implement the protection means are provided according to a third embodiment of the invention.

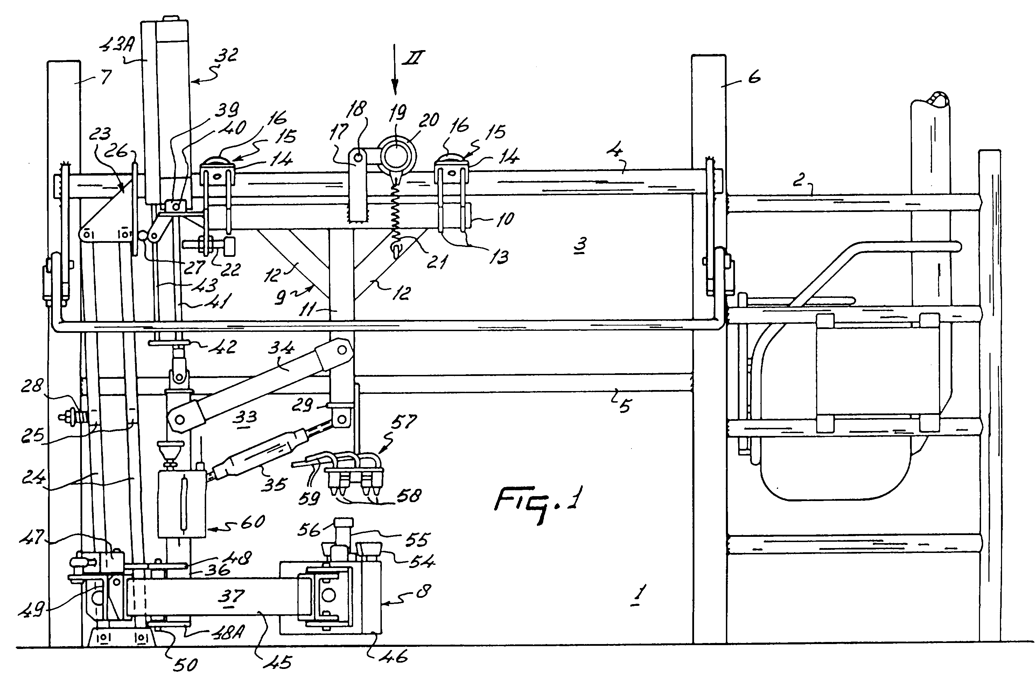

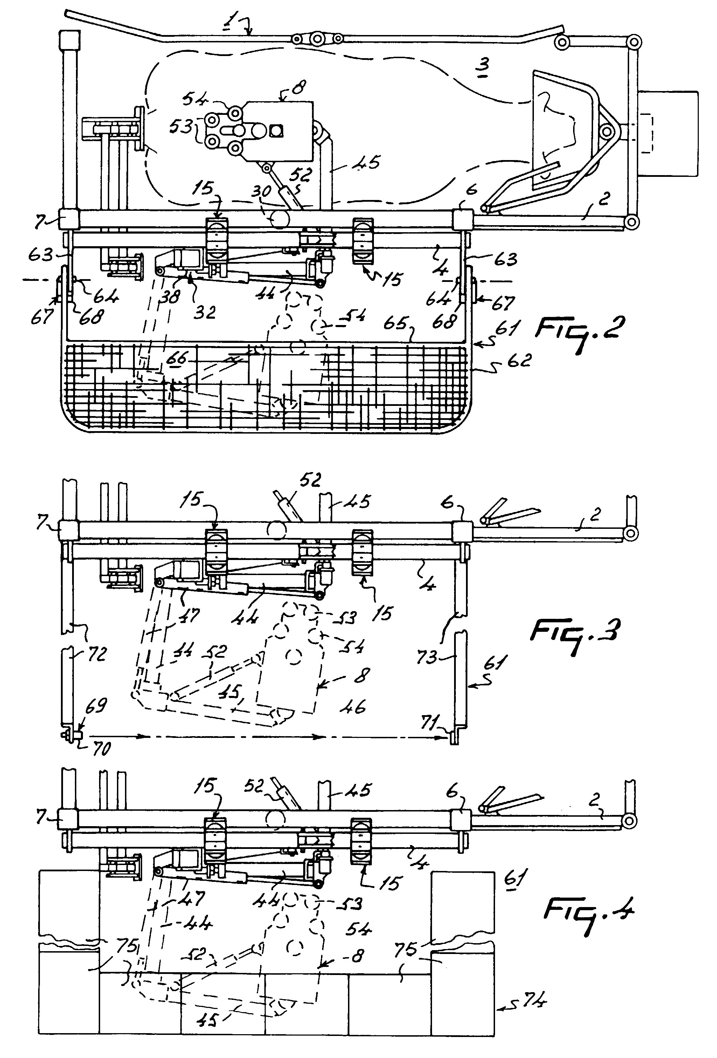

The implement as is shown in Figures 1 to 4 comprises a milking parlour 1 surrounded by a fencing 2 allowing the animal a limited freedom of movement. The animal can enter the milking parlour via a longitudinal side near the rear thereof and leave same via the same longitudinal side near the front thereof. The front side of the milking parlour being provided with a feeding installation, the cow will advance sufficiently far and will come into a position in which it can be milked easily. At the other longitudinal side of the milking parlour, being opposite to the one including the entrance and exit, there is provided a fixed frame 3 constituting part of the fencing 2, which frame 3 includes a first frame part 4 and a second frame part 5. The first frame part 4 extends parallel to the second frame part 5 and is situated substantially thereabove. The first frame part 4 is fixed to the outside of two vertical stands 6 and 7 constituting part of the fencing 2, while the second frame part 5 is fixed therebetween. To the first frame part 4, there is movably attached a milking robot 8 for automatically milking animals, while this milking robot is supported against the second frame part 5 disposed at such a height that the arms of the milking robot 8 are movable therebelow under the cow present in the milking parlour. The milking robot 8 comprises a carrier frame 9 for its further parts. By designing the upper frame part 4 as a rail, the carrier frame 9, and consequently the entire milking robot 8, can easily be moved along this frame part. The carrier frame 9 includes a beam 10 extending substantially parallel to the first frame part 4, a beam 11 directed vertically downwardly substantially perpendicular to the beam 10 and fixed thereto, and two struts 12. Near the ends of the beam 10, there are provided pairs of supporting elements 13. To each pair of supporting elements 13, by means of supporting plates 14 fixed thereto, at an angle of approximately 45° there are provided two rollers 16, constituting a rollers pair 15, in such a way that the carrier frame 9 is suspended easily movably along the upper frame part 4, therebelow. On the beam 10 of the carrier frame 9, on both sides, there are provided two carriers 17, to which there is attached a motor 19 movable about a pivot shaft 18. By this motor 19 there is driven a roller 20, preferably having a rubber surface, which roller is pushed against the upper frame part 4 by means of a spring member 21. The spring member 21 being active between the motor 19 and the carrier frame 9, the roller 20 to be driven by the motor 19 is kept pushed against the upper frame part 4, so that, when the motor is driven, it will be moved along the upper frame part 4 and, consequently, the entire carrier frame 9 will be moved. To the supporting member 13 which, relative to the milking parlour, is situated rearmost, there is attached a sensor 22 comprising e.g. a laser. By means of this sensor 22, it is possible to guide the milking robot, in the longitudinal direction of the milking parlour, from an inoperative position to a starting position, in which the milking robot arms are moved under the animal present in the milking parlour, and to follow the movements of the animal in the longitudinal direction thereof. For that purpose, the sensor 22 cooperates with a supporting member 23 which is movable against the rear side of the animal. By means of a rod system which, in the present embodiment, is constituted by a quadrangle construction and, in particular, by a parallellogram construction 24, this supporting member 23 is arranged on the milking parlour floor pivotably relative thereto. By means of two rods 25, the supporting member 23 is provided with a sidewardly outside the frame parts 4, 5 extending plate 26, which is arranged so as to be able to reflect a signal supplied by the sensor 22. After the sensor 22 has picked up the reflected signal, it will supply a control signal which is a measure for the actual, i.e. measured, distance between the plate 26 and the sensor 22, by means of which control signal the motor 19 can be operated, while the milking robot 8 is guided in the longitudinal direction of the milking parlour in such a way that the distance between the plate 26 and the sensor 22 is brought, respectively maintained, at an adjusted value. In its inoperative position, the milking robot 8 has been moved as rearwardly as possible relative to the frame parts 4 and 5, while pressing, by means of a contact element 27, against the plate 26 and thus keeping the supporting member 23 in its rearmost position. In other words, the supporting member 23 is locked by the milking robot 8 when the latter is in its inoperative position. When, in the longitudinal direction of the milking parlour, the milking robot is guided from this inoperative position to the starting position, in which its arms are moved under the animal present in the milking parlour, then the supporting member 23 is dislocked and, by means of a spring disposed between the parallellogram construction 24 and the fencing 2, is pushed under spring pressure against the rear side of the relevant animal. Upon a forward or backward movement of the cow, under pressure of the spring 28, the supporting member 23 will always be kept against the rear side of the animal, so that the position of the plate 26 determines that of the animal in the longitudinal direction of the milking parlour and, by means of the sensor 22, while maintaining the distance in longitudinal direction between the plate 26 and the sensor 22, the milking robot can follow the movements of the cow in the longitudinal direction of the milking parlour. In the present embodiment, the beam 11 of the carrier frame 9 extends vertically downwards to somewhat below the second frame part 5. At the lower side of this beam 11, there is disposed a horizontal, rearwardly extending strip 29 which is provided with a freely rotatable roller element 30. The lower frame part 5 is constituted by a rail, in particular one designed as a U-shaped beam, while the freely rotatable roller element 30 is arranged in such a way that it is movable between the two upright edges of the U-shaped beam. In this manner, the milking robot 8 is supported against the lower frame part 5 and, when being moved by means of the motor over the first frame part 4, can easily move along the second frame part 5. Besides the carrier frame 9, the milking robot comprises a robot arm 31 which, by means of a control cylinder 32, is movable substantially vertically relative to the carrier frame 9. By means of a quadrangle construction 33, the robot arm 31 is movably connected with the carrier frame 9. In the embodiment shown, the upper arm 34 of this quadrangle construction 33 has a fixed length, while the lower arm 35 thereof is adjustable in length so as to enable the robot arm 31 to be adjusted to a limited extent. The robot arm 31 comprises a substantially vertical robot arm 36 as well as robot arms 37 that are movable in a substantially horizontal plane. By means of the quadrangle construction 33, the robot arm 36 is connected with the beam 11 of the carrier frame 9. The control cylinder 32 is active between the carrier frame 9 and the robot arm 36. As, by means of the lower arm 35 of the quadrangle construction 33, the orientation of the robot arm 36 is slightly adjustable, the spatial position of the action point of the control cylinder 32 at the robot arm 36 is not entirely fixed. For that reason, the housing of the control cylinder 32 is provided, at least pivotably to a limited extent, on a carrier plate 38 attached to the beam 10 of the carrier frame 9. On this carrier plate 38 there are disposed supports 39, wherebetween the housing of the control cylinder 32 is capable of being moved about a pivot shaft 40. In the present embodiment, the control cylinder 32 is designed as a servo-pneumatic positioning cylinder. This means that, at the lower end of the piston rod 41, by means of a plate 42 fixed thereto, there is attached a position feedback rod 43, by means of which, in a part 43A of the control cylinder, a potentiometer will deduce a signal indicating the position of the piston rod relative to the cylinder housing, while, with the aid of the signal supplied by the potentiometer, the position of the piston rod 41 relative to the cylinder housing can be post-guided to a preset position. Furthermore, the control cylinder 32 is provided with an overload protection enabling the robot arm 31 to be moved into its lowest position, as soon as the animal present in the milking parlour exercises a pressure thereon, e.g. by kicking. Figure 2 shows (in interrupted lines) the milking robot 8 in its inoperative position, in which it has been moved as rearwardly as possible relative to the frame parts 4, 5 and the robot arm 31 has been brought nearest possible to the soil. When a cow is present in the milking parlour and the milking process is to be started, the milking robot 8 is brought from its inoperative position into the starting position, i.e. into the position wherein the arms of the milking robot 8 can be moved to under the cow.

In the present embodiment, for that purpose, the milking robot includes arms 44, 45 and 46. The arms 44 and 45 are arranged at a fixed angle of 90° relative to each other. Therefore, the arms 44 and 45 are moved together, i.e. by a control cylinder 47 provided between a supporting plate 48 attached to the robot arm 36 and a connecting piece 49 disposed between the two robot arms 44 and 45. The latter arms are pivotal about a substantially vertical pivot shaft 50 between the supporting plate 48 and a supporting plate 48A, which latter is also rigidly connected to the robot arm 36, more in particular at the lower end thereof. The arm 46 is pivotal relative to the arm 45 about a substantially vertical pivot shaft 51 and is pivoted with respect thereto by means of a control cylinder 52 disposed between the arm 46 and that end of the arm 45 that is situated near the connecting piece 49. Near the end of the arm 46 there are provided the teat cups 53 and 54 to be connected to the teats of a cow. Between the two teat cups 54 there is disposed a slide, which is movable along the arm 46 and on which there is present a sensor 55, which by a sectorwise scanning movement can accurately determine the position of the teats, so that the control cylinders 32, 47 and 52 can be computer-controlled in such a way that the teat cups will be connected properly to the teats. The robot arms 44 - 46 having been brought to under the cow, they are in a relatively low position, in which the sensor 55 will not yet detect teats. By means of the control cylinder 32, the robot arms 44 - 46 are raised stepwise until the sensor 55 detects one or more teats of the animal. When, during this upward movement, the robot arms 44 - 46 should have been raised to such a height that the upper side of the sensor 55 pushes against the cow's abdomen, then, by means of a switch 56 provided on the upper side of the sensor 55, a downward movement of the robot arms is effected, whereafter, by means of the sensor 55, while again stepwise raising the robot arms, the determination of the position of the teats can be repeated.

For the purpose of rinsing the teat cups 53 and 54, the above-described implement is furthermore provided with a rinsing device 57, which is fixed to the downwardly extending beam 11. The rinsing device 57 comprises four downwardly directed spray nozzles 58 connected to rinsing fluid supply lines 59. Via a (non-shown) pump, the rinsing fluid supply lines 59 may be connected to a (non-shown) rinsing fluid reservoir.

When the milking robot is not operative for the purpose of milking, which situation is represented in Figure 1, then the teat cups 53 and 54 are situated straight under the spray nozzles 58, so that, only by moving the robot arm with the teat cups upwardly, the latter are connected to the relative spray nozzles 58. Figure 2 shows the situation in which the robot arms are not yet displaced to such an extent that the teat cups are situated straight under the spray nozzles of the rinsing device. When, in the intervals between several milking runs, or after the animals have been milked, the teat cups and the milk lines connected thereto have to be cleaned, then the robot arm including the teat cups is brought to under the spray nozzles and moved upwardly until the spray nozzles engage the opening at the upper side of the teat cups. In this position, the first flow-out openings will be located almost directly below the top edge of a teat cup and the further openings will be situated almost directly thereabove. By subsequently supplying a rinsing fluid via the lines 59, this rinsing fluid, on the one hand, is passed over the upper side of the teat cups, while, on the other hand, rinsing fluid is introduced into the teat cups. During rinsing, by means of a three-way valve which during milking connects the milk lines connected to the teat cups with a central milk tank, the connection between the teat cups and the milk tank will be interrupted and there will be realized a connection with e.g. the rinsing fluid reservoir. In this manner, fluid can be circulated via the supply lines 59 and the spray nozzles, while subsequently, through the teat cups and the milk lines connected thereto, the rinsing fluid will be conveyed to the reservoir.

According to the invention, the robot arm 45 comprises an after-treating device 60, in this case for the purpose of, possibly animal-depending, disinfecting the udder and/or the teats after the animal has been milked. The after-treating-device 60 comprises a pressure vessel, in which the cleaning-/disinfecting fluid is stored. It will be obvious that, besides a pressure vessel for a cleaning-/disinfecting fluid, in the implement there may also be applied a pressure vessel for a medicinal fluid, which pressure vessel will have the same design and function as the afore-mentioned pressure vessel.

Furthermore, the above-described implement is provided with protection means 61 which prevent a person from approaching the robot arm 31 too closely and/or protect this person and/or draw the attention of this person to the fact that this person approaches the robot arm 31 too closely.

In a first embodiment according to Figures 1 and 2, the protection means 61 comprise a U-shaped bow 62 which, by means of lugs 63, is connected with stands 6 and 7 of the fencing 2. The U-shaped bow 62 is pivotably bearing-supported about pins 64 that are rigidly connected to the lugs 63. Near the centre, the legs of the U-shaped bow 62 are interconnected by a tube 65. Between the tube 65 and the base of the U-bow 62 there is provided a gauze screen 66, which is situated in a substantially horizontal plane at a height of approximately 1.50 m above the floor. During normal operation of the milking robot 8, the U-bow 62 bears on stops 67 rigidly connected to the lugs 63. When a person may wish to inspect the milking robot 8, the U-shaped bow 62 can pivot upwardly about the pins 64 through an angle of approximately 110° relative to the horizontal. Due to the favourable position of its centre of gravity, the U-shaped bow 62 is maintained in the upwardly pivoted position without further locking means.

Additionally, on a lug 63 there is provided a break contact 68 which, in the present embodiment, is designed as a micro switch. As soon as the U-shaped bow 62 pivots about the pins 64, the micro switch 68 is activated, the arrangement being such that the electric and pneumatic circuits of the milking robot 8 are automatically put out of operation. The application of the gauze screen 66 ensures that the robot arm 31 is approachable from above also with difficulty. In a preferred embodiment according to the invention, the distance between the fencing 2 and the base of the U-shaped bow 62 amounts to approximately 100 cm.

Figure 3 shows a second embodiment of the aforementioned implement, in which the protection means 61 comprise a light-interrupting sensor 69 including a transmitter 70 transmitting a light beam to a spaced-apart receiver 71. The transmitter 70 is provided at the end of a horizontal beam 72 disposed transversely to the stand 7 of the fencing 2, while the receiver 71 is provided also at the end of a horizontal beam 73 disposed transversely to the stand 6 of the fencing 2. The beams 72 and 73 have a length of approximately 100 cm and are arranged at a height of approximately 100 cm above the floor. At the moment when the light beam transmitted by the transmitter 70 is interrupted, e.g. by a person approaching the robot arm 31, the protection means 61 will supply a signal to a (non-shown) computer, by means of which signal the milking robot 8 is automatically put out of operation. After the milking robot 8 has been put out of operation, it can be put into operation again by means of a (non-shown) touch. The milking robot can also be put into operation again automatically by the computer, after an adjustable interval. It is also possible to point out to the supervisor, e.g. via a radiophone, that the milking robot has been put out of operation.

Figure 4 shows a third embodiment of the implement according to the invention, in which the protection means 61 include a contact strip 74 which, in the present embodiment, is disposed on the floor around the robot arm 31 and has a width of approximately 50 cm. In the present embodiment, the contact strip 74 includes a number of piezo elements 75 supplying a signal to a (non-shown) computer when a person comes into contact therewith. By means of the signal supplied by the piezo elements 75, the milking robot 8 is automatically put out of operation. Also in this case, by means of a (non-shown) control touch, the person can put the milking robot 8 into operation again or, after a fixed interval, this can be effected automatically by the computer.

In order to prevent, both in the second and the third embodiment as well as in the case of the above-described infrared sensor, domestic animals or vermin from unnecessarily putting the milking robot 8 out of operation, there has been inputted into the computer an adjustable threshold value, that has to be exceeded by the signals supplied by the aforementioned sensors before the computer will put the milking robot 8 out of operation.

Furthermore, the inventive idea implies to dispose in the above-mentioned implements, in the vicinity of the milking parlour 1, a loudspeaker and/or a flashing light which are/is activited by the signal to be supplied by the protection means 61, so that it is pointed out to a person that this person approaches the robot arm 31 too closely.

## Claims

1. An implement for automatically milking animals, such as cows, comprising a milking machine for automatically milking an animal and a milk box including a milking robot (8) for automatically connecting teat cups (53; 54) to the teats of an animal, which milking robot (8) includes a robot arm (31) which, in inoperative position, is arranged outside the milk box, characterized in that the implement is provided with protection means (61) which comprise a computer in which there is inputted an adjustable threshold value, and that, after this threshold value has been exceeded, by means of the signal to be supplied by a light-interrupting sensor (69) or by a contact strip (74) or by an infrared sensor, the milking robot (8) is automatically put out of operation by the computer and/or it is pointed out to the person, by means of an auditive or visual signal, that the robot arm (31) has been approached too closely.

2. An implement as claimed in claim 1, characterized in that the protection means (61) will put the milking robot (8) out of operation when the person approaches the robot arm (31) too closely.

3. An implement as claimed in claim 1 or 2, characterized in that, by means of an auditive or visual signal, the protection means (61) point out to the person that the robot arm (31) is approached too closely.

4. An implement as claimed in any one of claims 1 to 3, characterized in that the protection means (61) are disposed on the fencing (2) of the milk box.

5. An implement as claimed in any one of the preceding claims, characterized in that the protection means (61) are disposed at a height of between 30 cm and 170 cm, preferably of 150 cm, from the floor.

6. An implement as claimed in any one of claims 1 to 5, characterized in that the protection means (61) comprise a light-interrupting sensor (69) transmitting a beam of light along the front of the robot arm (31) and supplying a signal to a computer constituting part of the implement when the beam of light is interrupted by e.g. a person, with the aid of which signal the milking robot (8) is put out of operation and/or it is pointed out to the person, by means of an auditive or visual signal, that the robot arm (31) has been approached too closely.

7. An implement as claimed in any one of claims 1 to 3, characterized in that the protection means (61) comprise a contact strip (74) disposed in or on the floor around the robot arm (31), which contact strip (74), when the person treads thereon, supplies a signal to a computer constituting part of the implement, by means of which signal the milking robot (8) is put out of operation and/or it is pointed out to the person, by means of an auditive or visual signal, that the robot arm (31) has been approached too closely.

8. An implement as claimed in any one of claims 1 to 3, characterized in that the protection means (61) comprise an infrared sensor covering at least the area where the robot arm (31) is arranged in its inoperative position, and supplying a signal when the person enters there, by means of which signal the milking robot (8) is put out of operation and/or it is pointed out to the person, by means of an auditive or visual signal, that the robot arm (31) has been approached too closely.

9. An implement as claimed in claim 8, characterized in that the area to be covered is adjustable.

10. An implement as claimed in claim 7, characterized in that the contact strip (74) has a width of approximately 40 cm.

11. An implement as claimed in claim 7 or 10, characterized in that the contact strip includes piezo elements (75).

## Patentansprüche

1. Vorrichtung zum automatischen Melken von Tieren, wie z. B. Kühen, mit einer Melkmaschine zum automatischen Melken eines Tieres sowie einer Melkbox mit einem Melkroboter (8) zum automatischen Anschließen von Zitzenbechern (53; 54) an die Zitzen eines Tieres, wobei der Melkroboter (8) einen Roboterarm (37) aufweist, der in der Ruhelage außerhalb der Melkbox angeordnet ist,
dadurch gekennzeichnet, daß die Vorrichtung mit einer Schutzvorrichtung (61) versehen ist, die einen Computer umfaßt, in den ein einstellbarer Grenzwert eingegeben wird, und daß nach Überschreiten dieses Grenzwertes mit Hilfe des Signals, das von einer Lichtschranken-Vorrichtung (69) oder einem Kontaktstreifen (74) oder einem Infrarotsensor zu liefern ist, der Melkroboter (8) von dem Computer automatisch außer Betrieb gesetzt wird und/oder die Person durch ein akustisches oder visuelles Signal darauf aufmerksam gemacht wird, daß sie sich dem Roboterarm (37) zu weit genähert hat.

2. Vorrichtung nach Anspruch 1,
dadurch gekennzeichnet, daß die Schutzvorrichtung (61) den Melkroboter (8) außer Betrieb setzt, wenn sich die Person dem Roboterarm (37) zu weit nähert.

3. Vorrichtung nach Anspruch 1 oder 2,
dadurch gekennzeichnet, daß die Schutzvorrichtung (61) die Person durch ein akustisches oder visuelles Signal darauf aufmerksam macht, daß sie sich dem Roboterarm (37) zu weit genähert hat.

4. Vorrichtung nach einem der Ansprüche 1 bis 3,
dadurch gekennzeichnet, daß die Schutzvorrichtung (61) an der Einfassung (2) der Melkbox angeordnet ist.

5. Vorrichtung nach einem der vorhergehenden Ansprüche,
dadurch gekennzeichnet, daß die Schutzvorrichtung (61) in einer Höhe angeordnet ist, die zwischen 30 cm und 170 cm, vorzugsweise bei 150 cm über dem Boden liegt.

6. Vorrichtung nach einem der Ansprüche 1 bis 5,
dadurch gekennzeichnet, daß die Schutzvorrichtung (61) eine Lichtschranken-Vorrichtung (69) umfaßt, die einen Lichtstrahl an der Vorderseite des Roboterarmes (37) entlangsendet und ein Signal an einen Computer gibt, der Teil der Vorrichtung ist, wenn der Lichtstrahl beispielsweise durch eine Person unterbrochen wird, wobei der Melkroboter (8) durch das Signal außer Betrieb gesetzt wird und/oder die Person mittels eines akustischen oder visuellen Signals darauf aufmerksam gemacht wird, daß sie sich dem Roboterarm (37) zu weit genähert hat.

7. Vorrichtung nach einem der Ansprüche 1 bis 3,
dadurch gekennzeichnet, daß die Schutzvorrichtung (61) einen Kontaktstreifen (74) umfaßt, der um den Roboterarm (37) herum in oder auf dem Boden angeordnet ist, wobei der Kontaktstreifen (74) beim Betreten durch die Person ein Signal an einen Computer gibt, der Teil der Vorrichtung ist, mittels dessen der Melkroboter (8) außer Betrieb gesetzt wird und/oder die Person durch ein akustisches oder visuelles Signal darauf aufmerksam gemacht wird, daß sie sich dem Roboterarm (37) zu weit genähert hat.

8. Vorrichtung nach einem der Ansprüche 1 bis 3,
dadurch gekennzeichnet, daß die Schutzvorrichtung (61) einen Infrarotsensor umfaßt, der zumindest den Bereich abdeckt, in dem der Roboterarm (37) in seiner Ruhelage angeordnet ist, und der ein Signal liefert, wenn die Person diesen Bereich betritt, wobei der Melkroboter (8) durch das Signal außer Betrieb gesetzt wird und/oder die Person mittels eines akustischen oder visuellen Signals darauf aufmerksam gemacht wird, daß sie sich dem Roboterarm (37) zu weit genähert hat.

9. Vorrichtung nach Anspruch 8,
dadurch gekennzeichnet, daß der abzudeckende Bereich einstellbar ist.

10. Vorrichtung nach Anspruch 7,
dadurch gekennzeichnet, daß der Kontaktstreifen (74) eine Breite von etwa 40 cm hat.

11. Vorrichtung nach Anspruch 7 oder 10,
dadurch gekennzeichnet, daß der Kontaktstreifen Piezo-Elemente (75) enthält.

## Revendications

1. Installation de traite automatique d'animaux, tels que des vaches, comportant un dispositif de traite destiné à traire automatiquement un animal et un box de traite comportant un robot de traite (8), destiné à connecter automatiquement des gobelets trayeurs (53 ; 54) aux trayons d'un animal, lequel robot de traite (8) comporte un bras de robot (37) qui, dans une position inactive, est agencé à l'extérieur du box de traite, caractérisée en ce que l'installation est munie de moyens de protection (61) qui comportent un ordinateur dans lequel est enregistrée une valeur de seuil pouvant être ajustée, et en ce que, après que cette valeur de seuil ait été dépassée, par l'intermédiaire du signal devant être émis par le capteur d'interruption de lumière (69) ou par une bande de contact (74) ou par un capteur à infrarouge, le robot de traite (8) est automatiquement mis hors de fonctionnement par l'ordinateur et/ou on attire l'attention de la personne, par l'intermédiaire d'un signal audible ou visuel, sur le fait qu'elle s'approche trop près du robot de traite (37).

2. Installation selon la revendication 1, caractérisée en ce que les moyens de protection (61) vont mettre le robot de traite (8) hors de fonctionnement lorsque la personne s'approche trop près du bras de robot (37).

3. Installation selon la revendication 1 ou 2, caractérisée en ce que, par l'intermédiaire d'un signal audible ou visuel, les moyens de protection (61) attirent l'attention de la personne sur le fait qu'elle s'approche trop près du bras de robot (37).

4. Installation selon l'une quelconque des revendications 1 à 3, caractérisée en ce que les moyens de protection (61) sont disposés sur la barrière (2) du box de traite.

5. Installation selon l'une quelconque des revendications précédentes, caractérisée en ce que les moyens de protection (61) sont disposés à une hauteur située entre 30 cm et 170 cm, de préférence de 150 cm, à partir du sol.

6. Installation selon l'une quelconque des revendications 1 à 5, caractérisée en ce que les moyens de protection (61) comportent un capteur d'interruption de lumière (69) transmettant un faisceau de lumière le long de l'avant du bras de robot (37), et émettant un signal vers un ordinateur constituant une partie de l'installation lorsque le faisceau de lumière est interrompu, par exemple par une personne, signal à l'aide duquel le robot de traite (8) est mis hors de fonctionnement et/ou on attire l'attention de la personne, par l'intermédiaire d'un signal audible ou visuel, sur le fait qu'elle s'approche trop près du bras de robot (37).

7. Installation selon l'une quelconque des revendications 1 à 3, caractérisée en ce que les moyens de protection (61) comportent une bande de contact (74) disposée dans ou sur le sol autour du bras de robot (37), laquelle bande de contact (74), lorsque la personne passe sur celle-ci, émet un signal vers un ordinateur constituant une partie de l'installation, signal par l'intermédiaire duquel le robot de traite (8) est mis hors de fonctionnement et/ou on attire l'attention de la personne, par l'intermédiaire d'un signal audible ou visuel, sur le fait qu'elle s'approche trop près du bras de robot (37).

8. Installation selon l'une quelconque des revendications 1 à 3, caractérisée en ce que les moyens de protection (61) comportent un capteur à infrarouge couvrant au moins la zone où le bras de robot (37) est agencé dans sa position inactive, et émettant un signal lorsque la personne rentre dans celle-ci, signal par l'intermédiaire duquel le robot de traite (8) est mis hors de fonctionnement et/ou on attire l'attention de la personne, par l'intermédiaire d'un signal audible ou visuel, sur le fait qu'elle s'approche trop près du bras de robot (37).

9. Installation selon la revendication 8, caractérisée en ce que la zone devant être couverte peut être ajustée.

10. Installation selon la revendication 7, caractérisée en ce que la bande de contact (74) a une largeur d'approximativement 40 cm.

11. Installation selon la revendication 7 ou 10, caractérisée en ce que la bande de contact comporte des éléments piézoélectriques (75).
